Europäisches Patentamt

(19) European Patent Office

Office européen des brevets

(11) Veröffentlichungsnummer: 0 024 444

A1

(12) EUROPÄISCHE PATENTANMELDUNG

(21) Anmeldenummer: 79103121.4

(51) Int. Cl.³: F 23 N 1/02

(22) Anmeldetag: 24.08.79

(43) Veröffentlichungstag der Anmeldung:
11.03.81 Patentblatt 81/10

(84) Benannte Vertragsstaaten:
BE DE FR GB NL

(71) Anmelder: G. Kromschröder Aktiengesellschaft
Jahnplatz 6
D-4500 Osnabrück(DE)

(72) Erfinder: Brüggemann, Christa
Friedensstrasse 2
D-4550 Bramsche 8(DE)

(72) Erfinder: Ambrozus, Werner
Belchenstrasse 10
D-7505 Ettlingen(DE)

(74) Vertreter: Wolgast, Rudolf, Dr. et al,
Bökenbusch 41 Postfach 11 03 86
D-5620 Velbert 11 Langenberg(DE)

(54) Regelvorrichtung zur Regelung des Mischungsverhältnisses von Brenngas und Luft bei Gasbrennern.

(57) Bei Gasbrennern, bei denen eine Vorwärmung der Luft durch Abgaswärme mittels eines Rekuperators (32) erfolgt, erfolgt eine Regelung des Mischungsverhältnisses von Brenngas und Luft unter Berücksichtigung der Temperaturänderungen der Luft. Zu diesem Zweck ist in der Luftzufuhrleitung (12) eine Meßblende (42) angeordnet. Vor der Meßblende (42) zweigt eine Hilfsdruck-gasleitung (54) ab, die einen Hilfsdruckgas-Druckregler (52) enthält und über eine Drossel (56) mit der Atmosphäre verbunden ist. Eine Membran (44) ist von dem Differenzdruck an der Meßblende (42) beaufschlagt. Die an der Membran (44) wirksame Kraft belastet die Reglermembran des Hilfsdruckgas-Druckreglers (52), so daß der an dessen Ausgang auftretende Druck eine Maß für die zugeführte Luftmenge ist. Dieser Druck belastet einen Druckregler (58) in der Gaszufuhrleitung (10). Dadurch wird der Gasdruck und damit die dem Brenner zugeführte Gasmenge proportional der zugeführten Kaltluftmenge gehalten.

Bei einer Abwandlung wird bei konstantem Gasdruck die Luftmenge geregelt. Es können mehrere Druckregler für den Gasdruck verschiedener Brenner vorgesehen sein, wobei der Ausgangsdruck des Hilfsdruckgas-Druckreglers (52) als gemeinsame Führungsgröße auf alle diese Druckregler aufgeschaltet ist.

FIG 1

Croydon Printing Company Ltd.

## Regelvorrichtung zur Regelung des Mischungsverhältnisses von Brenngas und Luft bei Gasbrennern

Die Erfindung betrifft eine Regelvorrichtung zur Regelung des Mischungsverhältnisses von Brenngas und Luft bei Gasbrennern, bei denen eine Vorwärmung der Luft durch die Abgaswärme erfolgt, enthaltend eine Gaszufuhrleitung, eine Luftzufuhrleitung, einen Rekuperator in der Luftzufuhrleitung, in welchem die Vorwärmung der Luft durch Wärmeaustausch mit dem Abgas erfolgt, eine Meßblende in der Luftzufuhrleitung stromauf von dem Rekuperator, ein von dem Differenzdruck an der Meßblende beaufschlagtes Hubglied und einen durch das Hubglied gesteuerten Druckregler in einer der Zufuhrleitungen.

Zur Regelung des Mischungsverhältnisses von Brenngas und Luft sind "Gleichdruckregler" bekannt, durch welche der Druck des dem Gasbrenner zugeführten Brenngases an den Druck der dem Gasbrenner zugeführten Verbrennungsluft angepaßt wird. Ein solcher Gleichdruckregler enthält als Hubglied eine Reglermembran, durch welche ein in der Gaszufuhrleitung liegendes Regelventil gesteuert ist. Die Reglermembran ist auf der einen Seite von dem Ausgangsdruck des Gleichdruckreglers und auf der anderen Seite vom Druck der Verbrennungsluft beaufschlagt, wobei der erstere Druck das Regelventil im öffnenden und der letztere Druck das Regelventil im schließenden Sinne ansteuert. Der Luftdruck ist von einem Temperaturfühler über einen Stellmotor und ein von diesem verstellbares Ventil in der Luftzufuhrleitung nach Maßgabe des Wärmebedarfs veränderbar. Der Gasdruck wird durch den Gleichdruckregler diesen Änderungen des Luftdrucks nachgeführt.

Aus Gründen der Energieeinsparung ist man dazu übergegangen, die Luft durch die Abgaswärme vorzuwärmen. Das geschieht mittels eines "Rekuperators", d.h. eines Wärmetauschers, der in den Abgaskanal und mit luftdurchströmten Kanälen in die Luftzufuhrleitung eingeschaltet ist, wobei die dem Brenner zugeführte Luft im Gegenstrom durch die Abgase vorgewärmt wird. Das hat den Vorteil, daß diejenige Verbrennungswärme, die sonst zur Erwärmung der Luft auf die Vorwärmtemperatur verbraucht wird, für andere Zwecke zur Verfügung steht. Bei einer solchen Vorwärmung der Verbrennungsluft ist aber die vorstehend beschriebene Gleichdruckregelung nicht anwendbar. Einem bestimmten Luftdruck vor dem Brenner entspricht ein bestimmtes Luftvolumen, das unter dem Einfluß dieses Luftdruckes pro Zeiteinheit am Brenner ausströmt. Diesem Luftvolumen entspricht wiederum bei Kaltluft eine bestimmte Sauerstoffmenge, der eindeutig eine optimale Gasmenge zugeordnet werden kann. Wird die Luft in dem Rekuperator erwärmt, so daß sie sich ausdehnt, so entspricht dem gleichen Luftvolumen und damit dem gleichen Luftdruck vor dem Brenner eine verminderte Sauerstoffmenge. Ein dem Luftdruck und damit dem Luftvolumen nachgeführter Gasdruck würde daher bei stark veränderlicher Lufttemperatur entweder zu einem Gas- oder zu einem Luftüberschuß führen.

Es ist aus diesem Grunde bekannt, stromauf von dem Rekuperator in der Luftzufuhrleitung eine Meßblende anzuordnen, an welchem ein Differenzdruck abfällt. Dieser Differenzdruck ist ein Maß für die pro Zeiteinheit zugeführte Menge an Kaltluft unabhängig davon, wie diese Kaltluft von dem nachgeschalteten Rekuperator erwärmt wird. Dieser Kaltluftmenge wird der Gasdruck vor dem Brenner nachgeführt. Zu diesem Zweck wird der Differenzdruck, der an der Meßblende auftritt, auf ein Hubglied in Form einer Membran gegeben. An der Membran wirkt dann eine Kraft, die gleich dem Differenzdruck multipliziert mit der Membranfläche ist. Mit dieser Kraft ist die Reglermembran eines Druckreglers belastet, der in der Gaszuleitung angeordnet ist. Der Ausgangsdruck des Druckreglers wirkt an der Reglermembran der differenzdruckproportionalen Kraft entgegen, und die Reglermembran steuert in üblicher Weise ein Regelventil so, daß der Ausgangsdruck gleich der besagten Kraft, dividiert durch die Fläche der Reglermembran wird.

Auf diese Weise wird der Gasdruck vor dem Brenner proportional der pro Zeiteinheit zugeführten Kaltluftmenge gemacht, so daß unabhängig vom Grad der Erwärmung der Verbrennungsluft das richtige Mischungsverhältnis eingehalten werden kann.

Diese bekannte Anordnung stößt auf praktische Schwierigkeiten: An der Meßblende tritt ein Differenzdruck auf, der naturgemäß wesentlich kleiner ist als der Absolutwert des Gas- oder Luftdruckes. Wenn in der geschilderten Weise der Gasdruck proportional dem Differenzdruck gemacht werden und dabei aber einen Absolutwert haben soll, der etwa - im Anfangsstadium - dem Absolutwert des Luftdrucks entspricht, dann muß eine Druckübersetzung stattfinden. Es soll ja die von dem Differenzdruck auf die erstere Membran ausgeübte Kraft der Kraft die Waage halten, welche der Ausgangsdruck auf die Reglermembran ausübt. Um eine Druckübersetzung zu erreichen, muß daher

4

die Reglermembran wesentlich kleiner sein als die vom Differenzdruck beaufschlagte Membran.

Nun muß andererseits der Regler eine für den Betrieb des Gasbrenners ausreichende Gasmenge durchlasssen. Der Regler einschließlich der Reglermembran darf daher eine bestimmte Größe nicht unterschreiten. Es muß ein ausreichender Ventilhub sichergestellt sein, und die Fläche der für die Durchführung des Ventilstößels vorgesehenen Membran muß klein gegen die Fläche der Reglermembran sein. Das Erfodernis der Druckübersetzung führt dann aber bei Brennern oder Öfen höherer Leistung zu untragbaren Abmessungen der "Druckdifferenz"-Membran.

Der Erfindung liegt daher die Aufgabe zugrunde, eine Regelvorrichtung der eingangs definierten Art so auszubilden, daß bei tragbaren Abmessungen der Bauteile auch bei höheren Leistungen eine temperaturunabhängige Anpassung des Gasdrucks an die zugeführte Kaltluftmenge erfolgt.

Erfindungsgemäß wird diese Aufgabe dadurch gelöst, daß

(a) in einer Hilfsdruckgasleitung, die über eine Drossel mit der Atmosphäre verbunden ist, ein Hilfsdruckgas-Druckregler mit einer belasteten, vom Ausgangsdruck des Hilfsdruckgas-Druckreglers beaufschlagten Reglermembran angeordnet ist,

(b) die Reglermembran mit der Kraft belastet ist, die infolge des Differenzdrucks an dem Hubglied wirksam wird, und

(c) der Ausgangsdruck des Hilfsdruckgas-Druckreglers als Führungsgröße den in einer der Zufuhrleitungen angeordneten Druckregler beaufschlagt.

Nach der Erfindung wird die Druckdifferenz an der Meßblende zunächst über das Hubglied, z.B. eine Membran, als Belastung an der Regelmembran eines Hilfsdruckgas-Druckreglers wirksam. Dieser erzeugt einen Ausgangsdruck in einem Hilfsdruckgasstrom. Dieser Ausgangsdruck bestimmt wieder den Ausgangsdruck eines z.B. als Gleichdruckregler ausgebildeten Druckrelgers, der in der Gas- oder Luftzufuhrleitung angeordnet ist.

Da der Hilfsdruckgasstrom relativ schwach ist, kann der Hilfsdruckgas-Druckregler die erforderliche Druckübersetzung liefern, ohne daß die Abmessungen der Bauteile, insbesondere der "Differenzdruck"-Membran unzulässig groß würden. Der Druckregler in der Zufuhrleitung braucht den Ausgangsdruck des Hilfsdruckgas-Druckreglers nur 1:1 auf den Druck in der Zufuhrleitung abzubilden, so daß, ebenfalls ohne unzuträglich große Abmessungen, ausreichend große Gasströme geregelt werden können.

Einige Ausführungsbeispiele der Erfindung sind nachstehend unter Bezugnahme auf die zugehörigen Zeichnungen näher erläutert:

Fig. 1    zeigt als Blockschaltbild eine erste, bevorzugte Ausführungsform der Erfindung.

Fig. 2    zeigt als Blockschaltbild eine zweite Ausführungsform.

Fig. 3    zeigt als Blockschaltbild eine dritte Ausführungsform.

Fig. 4    zeigt schematisch eine bei den Ausführungen von Fig. 1 bis 3 benutzte Reglerbaugruppe.

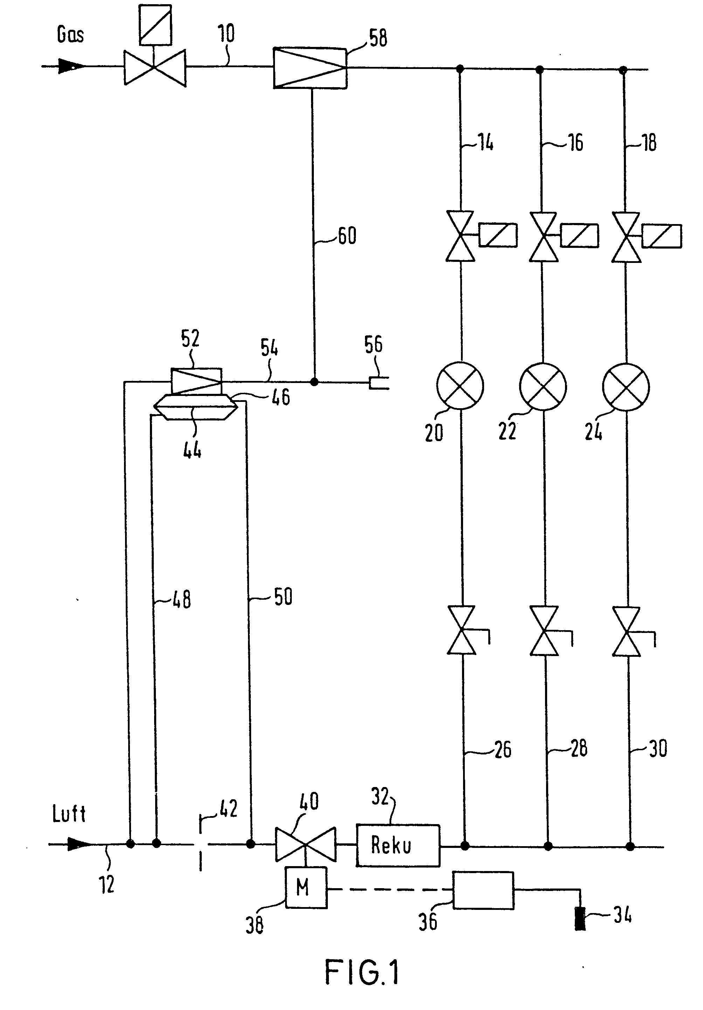

Bei der Ausführungsform nach Fig. 1 ist eine Gaszufuhrleitung 10 und eine Luftzufuhrleitung 12 vorgesehen, über welche Gas bzw. Luft unter Druck zugeführt werden. Die Gaszufuhrleitung teilt sich in Zweige 14,16,18 auf, die zu je einem Brenner 20,22 bzw. 24 geführt sind. In entsprechender Weise teilt sich die Luftzufuhrleitung 12 in Zweige 26,28,30, die ebenfalls zu den Brennern 20,22 bzw. 24 geführt sind.

In die Luftzufuhrleitung 12 ist ein Rekuperator 32 eingeschaltet, in welchem in bekannter Weise die Vorwärmung der Luft durch Wärmeaustausch mit dem Abgas erfolgt. Die Temperatur des Ofens wird von einem Temperaturfühler 34 gemessen. Über einen Regler 36 wird von dem Temperaturfühler 34 ein Stellmotor 38 gesteuert, der ein in der Luftzufuhrleitung 12 stromauf von dem Rekuperator liegendes Ventil 40 steuert. Wenn die Temperatur des Ofens über einen Sollwert ansteigt, drosselt das Ventil 40 die Luftzufuhr. Es gilt dann, die Gaszufuhr in entsprechender Weise zu drosseln, so daß ein optimales Mischungsverhältnis von Luft und Brenngas gewährleistet ist. Das Problem dabei ist, daß die Temperatur der vorgewärmten Luft sich ändert. Damit ändert sich auch die Menge des in einem Kubikmeter dieser vorgewärmten Luft enthaltenen Sauerstoffs. Es kann also nicht etwa, wie beim Stand der Technik, der Druck der Luft in den Zweigen 26,28,30 benutzt werden, um den Gasdruck zu steuern.

Aus diesem Grunde ist in der Luftzufuhrleitung 12 stromauf von dem Rekuperator 32 und dem Ventil 40 eine Meßblende 42 angeordnet. An der Meßblende 42 entsteht ein Differenzdruck, der ein Maß für die pro Zeiteinheit durch die Meßblende 42 strömende Menge von Kaltluft ist. Dieser Differenzdruck an der Meßblende 42 wird an einer Membran 44 wirksam, die in einem Gehäuse 46 eingespannt ist. Der Raum unterhalb der Membran 44 ist durch eine Leitung 48 mit der Luftzufuhrleitung 12 stromauf von der Meßblende 42 verbunden, und der Raum oberhalb der Membran 44 ist durch eine Leitung 50 mit der Luftzufuhrleitung 12 stromab von der Meßblende verbunden. Die an der Membran wirksame Kraft, nämlich Differenzdruck mal Membranfläche belastet die Reglermembran eines Hilfsdruckgas-Druckreglers 52, der in einer Hilfsdruckgasleitung 54 angeordnet ist. Die Hilfsdruckgasleitung 54 ist über eine Drossel 56 mit der Atmosphäre verbunden. Der Ausgangsdruck des Hilfsdruckgas-Druckregler 52 wird dadurch proportional dem Differenzdruck, der an der Meßblende 42 abfällt. Bei dem bevorzugten Ausführungsbeispiel der Erfindung ist die Hilfsdruckgasleitung 54 von der Luftzufuhrleitung 12 vor der Meßblende 42 abgezweigt, so daß ein Teil der als Verbrennungsluft zugeführten Luft das Hilfsdruckgas bildet.

Der Ausgangsdruck des Hilfsdruckgas-Druckreglers 52 beaufschlagt als Führungsgröße einen in der Gaszufuhrleitung 10 angeordneten Druckregler 58. Der Druckregler 58 ist bei der Ausführungsform von Fig. 1 ein Gleichdruckregler, an dessen Hubglied (Membran) der Ausgangsdruck des Gleichdruckreglers, also der Gasdruck vor dem Brenner 20,22,24, dem Ausgangsdruck des Hilfsdruckgas-Druckregler 52 entgegenwirkt, der über eine Leitung 60 zugeführt wird. Die Leitung 60 zweigt dabei zwischen dem Ausgang des Hilfsdruckgas-Druckreglers 52 und der Drossel 56 ab.

Der Differenzdruck an der Meßblende 42 ist wesentlich kleiner als der Absolutwert des Gasdrucks, der in den Zweigen 14,16,18 vor den Brennern 20,22,24 eingeregelt werden soll. Es muß daher eine Druckübersetzung stattfinden. Die Fläche der Membran 44 muß entsprechend größer sein als die Fläche der Reglermembran des Hilfsdruckgas- Druckreglers 52. Ein solches Flächenverhältnis bietet keine konstruktiven Schwierigkeiten, da der Hilfsdruckgas- Druckregler 52 nur einen relativ geringen Luftstrom zu regeln braucht. Der Ausgangsdruck des Hilfsdruckgas- Druckreglers 52 ist dementsprechend im Verhältnis der

8

Membranflächen gegenüber dem Differenzdruck an der Meßblende 42 übersetzt. Der Druckregler 58 kann dann ein üblicher Gleichdruckregler sein, der den Gasdruck diesem übersetzten Ausgangsdruck nachführt.

Bei der erfindungsgemäßen Anordnung wird somit die zugeführte Kaltluftmenge gemessen. An diese wird der Gasdruck vor dem Brenner 20,22 oder 24 angepaßt damit kann stets ein optimales Mischungsverhältnis von Luft und Brenngas erreicht werden, wobei unbeachtlich ist, wie die Luft in dem Rekuperatur 32 erwärmt wird.

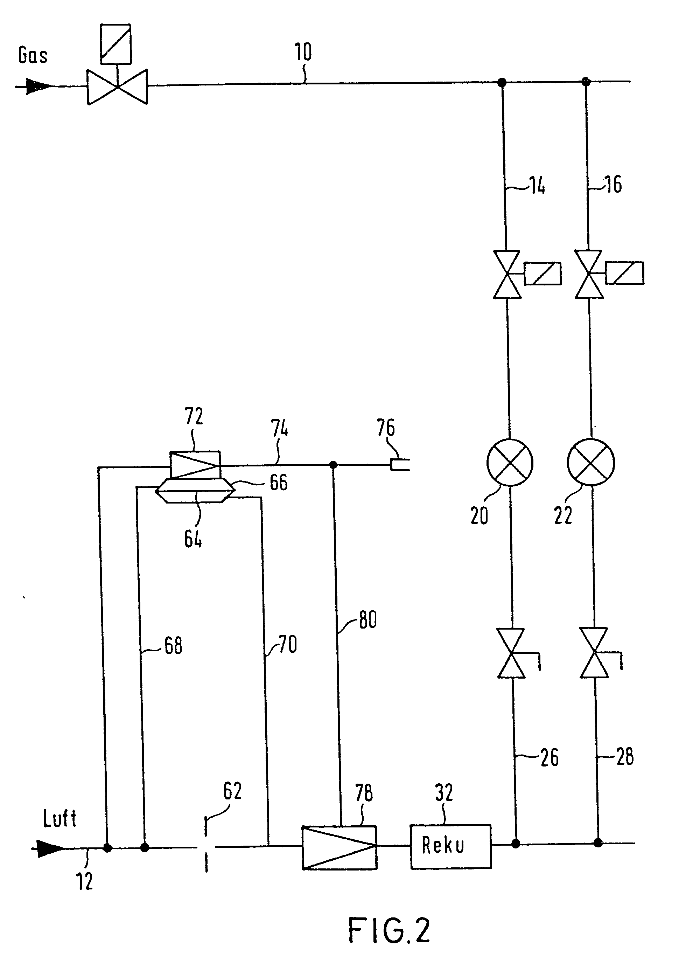

Eine andere Ausführungsform zeigt Fig. 2, in welcher entsprechende Teile mit dem gleichen Bezugszeichen versehen sind wie die in Fig. 1.

Bei der Ausführungsform nach Fig. 2 wird der Druck in der Gaszufuhrleitung 10 konstant gehalten. Damit ist eine im wesentlichen konstante Gaszufuhr gewährleistet. Es erfolgt eine Regelung der Luftzufuhr, so daß, unabhängig von der Erwärmung der Luft in dem Rekuperator 32 ein konstanter Kaltluftstrom aufrechterhalten wird.

Der Druck in der Gaszufuhrleitung 10 wird durch einen (nicht dargestellten) Gasdruckregler auf einen festen Wert geregelt. Auch bei der Ausführungsform nach Fig. 2 ist in der Luftzufuhrleitung 12 stromauf von dem Rekuperator 32 eine Meßblende 60 angeordnet. Von dem an der Meßblende 62 auftretenden Differenzdruck ist ein Hub-Glied in Gestalt einer Membran 64 beaufschlagt. Die Membran 64 ist in einem Gehäuse 66 eingespannt. Eine Leitung 68 verbindet die Luftzufuhrleitung 12 vor der Meßblende 62 mit dem Raum oberhalb der Membran 64, und eine Leitung 70 verbindet die Luftzufuhrleitung 12 stromab von der Meßblende 62 mit dem Raum unterhalb der Membran 64. Durch einen Differenzdruck an der Meßblende 62 wird somit eine nach unten in Fig. 2 gerichtete Kraft erzeugt, während bei der Ausführung nach Fig. 1 durch den Differenzdruck eine nach oben gerichtete Kraft hervorgerufen wurde. Die Begriffe "oben" und "unten" sind natürlich relativ. Wesentlich ist, daß die Kraft bei der Ausführungsform nach Fig. 2 in entgegengesetzter Richtung wirkt wie bei der Ausführungsform nach Fig. 1. Die Kraft, die an der Membran 64 durch den Differenzdruck erzeugt wird, wirkt auf die Reglermembran eines Hilfsdruckgas-Druckreglers 72, der in einer Hilfsdruckgasleitung 74 angeordnet ist. Die Hilfsdruckgasleitung 74 ist, wie bei Fig. 1, stromauf von der Meßblende von der Luftzufuhrleitung 12 abgezweigt und über eine Drossel 76 mit der Atmosphäre verbunden.

Durch den Differenzdruck an der Meßblende 62 und die dadurch hervorgerufene Kraft an der Membran 64 wird die Reglermembran des Hilfsdruckgas-Druckreglers entlastet, so daß der geregelte Ausgangsdruck des Hilfsdruckgas-Druckreglers mit steigendem Differenzdruck an der Meßblende 62 absinkt.

In der Luftzufuhrleitung 12 stromab von der Meßblende 62 aber stromauf von dem Rekuperator 32 ist ein Gleichdruckregler 78 angeordnet. Auf den Gleichdruckregler 78 wird der Ausgangsdruck des Hilfsdruckgas-Druckreglers 72 über eine Leitung 80 geschaltet. Es sei angenommen, daß im Ausgangszustand, wenn die Luft im Rekuperator 32 noch nicht vorgewärmt wird, Gasstrom und Luftstrom im optimalen Mischungsverhältnis zueinander stehen. Wenn jetzt eine Vorwärmung der Luft im Rekuperator 32 erfolgt, so wird das Luftvolumen hinter dem Rekuperator 32 erhöht. Infolge des Strömungswiderstands des Brenners 20 bzw. 22 steigt der Luftdruck vor dem Brenner an und der zugeführte Kaltluftstrom würde absinken. Das führt dazu, daß auch der Differenzdruck an der Meßblende 62 absinkt und dementsprechend der Ausgangsdruck des Hilfsdruckgas-Druckregler 72 steigt. Der Gleichdruckregler 78 regelt daher ein höheren Luftdruck vor dem Rekuperator 32 ein und erhöht somit den Luftstrom, bis der Differenzdruck an der Meßblende 62 wieder den alten Wert erreicht hat.

Auch hier erfolgt eine Druckübersetzung zwischen dem Differenzdruck an der Meßblende 62 und dem Ausgangsdruck des Hilfsdruckgas-Druckreglers 72, der den Absolutwert des Luftdrucks vor dem Rekuperator 32 bestimmt. Diese Druckübersetzung wird durch ein entsprechendes Flächenverhältnis der Membran 64 und der Reglermembran erreicht. Auch dies bietet keine Schwierigkeiten, da der Hilfsdruckgas-Druckregler 72 nur einen relativ geringen Luftstrom in der Hilfsdruckgasleitung 74 zu regeln hat.

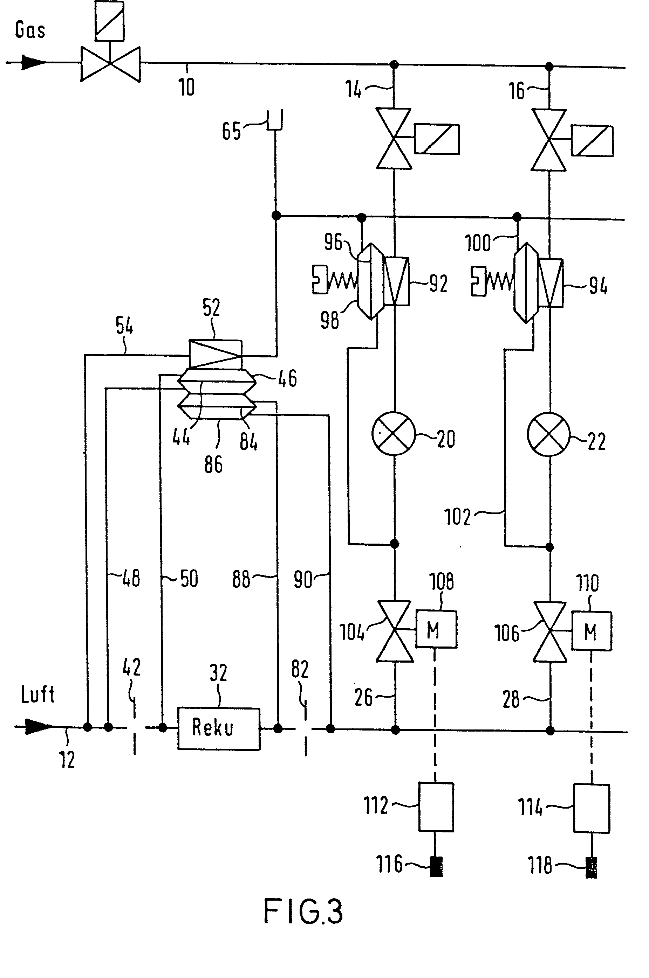

Bei den bisher beschriebenen Ausführungsformen erfolgt jeweils eine Regelung des gesamten Ofens. Es kann wünschenswert sein, eine Temperaturregelung für einzelne Brenner hinter einem Rekuperator vorzusehen. Eine solche Ausführungsform zeigt Fig. 3. In dieser Figur sind für entsprechende Teile die gleichen Bezugszeichen verwendet wie in Fig. 1.

Bei der Ausführungsform nach Fig. 3 ist in der Luftzufuhrleitung 12 stromab von dem Rekuperator 32 eine zweite Meßblende 82 angeordnet. Ein zweites Hubglied in Gestalt einer Membran 84 ist von dem an der zweiten Meßblende 82 auftretenden Differenzdruck beaufschlagt. Die Membran 84 ist in einem Gehäuse 86 eingespannt, das gleichachsig zu dem Gehäuse 46 der Membran 44 angeordnet ist. Während die Leitung 84, die vor der Meßblende 42 abzweigt, mit dem unterhalb der Membran 44 liegenden Raum des Meßgehäuses 46 verbunden ist und die hinter der Meßblende 42 abzweigende Leitung 50 zu dem Raum oberhalb der Membran 40 geführt ist, ist eine Leitung 88, die vor der Meßblende 82 abzweigt, zu der oberhalb der Membran 84 liegenden Kammer des Gehäuses 86 geführt, und eine Leitung 90, die hinter der Meßblende 82 abzweigt, ist mit der Kammer unterhalb der Membran 84 verbunden. Die beiden Membranen 44 und 84 sind miteinander und mit der Reglermembran des Hilfsdruckgas-Druckreglers 52 verbunden.

Auf diese Weise wirkt die Kraft, die infolge des an der zweiten Meßblende 82 wirksamen Differenzdrucks an dem zweiten Hubglied, der Membran 84, wirksam wird, an der Reglermembran des Hilfsdruckgas-Druckreglers 52 derjenigen Kraft entgegen, die infolge des Differenzdrucks an der stromaufwärtigen Meßblende 42 über das erste Hubglied, d.h. die Membran 44, ausgeübt wird.

Die Gaszufuhrleitung 10 und die Luftzufuhrleitung 12 teilen sich in Zweige, 14,16 bzw. 26,28 auf, die zu je einem Brenner 20,22 geführt sind. In jedem Zweig 14,16 der Gaszufuhrleitung 10 ist ein Druckregler 92 bzw. 94 angeordnet. Die Regelmembran jedes Druckreglers ist von einer Kraft vorbelastet, die über eine Membran 96 ausgeübt wird. Die Membran 96 ist in einem Gehäuse 98 eingespannt. Über jeweils eine Leitung 100 wird die Membran 96 von dem Ausgangsdruck des Hilfsdruckgas-Druckreglers 52 beaufschlagt. Auf der anderen Seite wirkt auf die Membran 96 über eine Leitung 102 der Luftdruck unmittelbar vor dem Brenner 20 bzw. 22.

Auf diese Weise ist auf alle Druckregler 92,94 als gemeinsames Führungsgröße der Ausgangsdruck des Hilfsdruckgas-Druckreglers 52 sowie, diesem entgegenwirkend, der Druck der dem jeweiligen Brenner 20,22 zugeführten Luft aufgeschaltet.

In jedem Zweig 26,28 liegt ein Ventil 104,106, das von einem Stellmotor 108 bzw. 110 verstellbar ist. Die Stellmotore 108,110 werden von je einem Regler 112 bzw. 114 gesteuert, der mit je einem Temperaturfühler 116 bzw. 118 als Meßfühler verbunden ist.

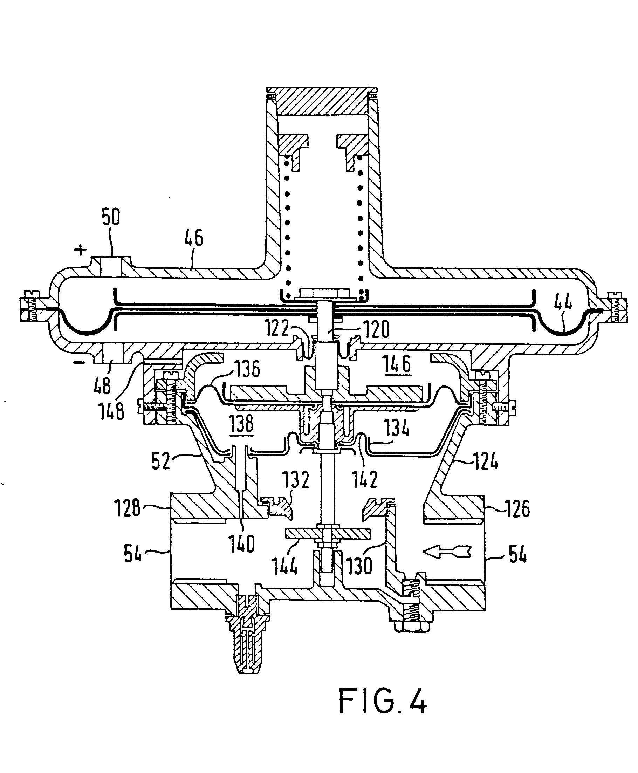

Fig. 4 zeigt die Reglerbaugruppe, die beispielsweise für den Hilfsdruckgas-Druckreglers 52, die Membran 44 und das Gehäuse 46 benutzt wird. Die Membran 44 trägt eine zentrale Spindel 120, die aus dem Gehäuse 46 heraus mittels einer Membrandurchführung 122 in das Gehäuse 124 des Hilfsdruckgas-Druckreglers 52 geführt ist. Das Gehäuse 124 weist einen Einlaßstutzen 126 und einen Auslaßstutzen 128 auf, die durch eine Trennwand 130 mit einem Ventilsitz 132 getrennt sind. In dem einlaßseitig von dem Ventilsitz 132 gebildeten Gehäuseinnenraum sitzt eine Zwischenwand 134, die mit der Reglermembran 136 eine Membrankammer 138 bildet. Die Membrankammer 138 steht über einen Kanal 140 mit dem Auslaßstutzen 128 in Verbindung. Die zentrale Spindel 120 ist mittels einer Membrandurchführung 142 durch die Zwischenwand 134 hindurchgeführt und ragt durch den Ventilsitz 132 hindurch. Sie trägt auslaßseitig von dem Ventilsitz 132 einen Ventilteller 144. Die oberhalb der Reglermembran 136 gebildete Membrankammer 146 steht über einen Kanal 148 mit der Atmosphäre in Verbindung.

Die Reglermembran 136 ist mit der Kraft belastet, die sich aus dem Differenzdruck an der Membran 44 multipliziert mit der Fläche der Membran 44 ergibt. Diese Kraft wirkt der Ausgangsdruck im Auslaßstutzen 128 entgegen, der auf die Reglermembran 136 wirkt. Bei einem Überwiegen des Differenzdruck an der Membran 44 über den Auslaßdruck wird der Ventilteller 144 nach unten bewegt und das Regelventil weiter geöffnet. Der Ausgangsdruck ist gegenüber der Druckdifferenz um einen Faktor vergrößert, der sich aus dem Flächenverhältnis der Membranen ergibt.

Baugruppen dieser Art sind ansich bekannt.

13

## Patentansprüche

1. Regelvorrichtung zur Regelung des Mischungsverhältnisses von Brenngas und Luft bei Gasbrennern, bei denen eine Vorwärmung der Luft durch die Abgaswärme erfolgt, enthaltend eine Gaszufuhrleitung, eine Luftzufuhrleitung, einen Rekuperator in der Luftzufuhrleitung, in welchem die Vorwärmung der Luft durch Wärmeaustausch mit dem Abgas erfolgt, eine Meßblende in der Luftzufuhrleitung stromauf von dem Rekuperator, ein von dem Differenzdruck an der Meßblende beaufschlagtes Hubglied und einen durch das Hubglied gesteuerten Druckregler in einer der Zufuhrleitungen, dadurch gekennzeichnet, daß

(a) in einer Hilfsdruckgasleitung (54), die über eine Drossel (56) mit der Atmosphäre verbunden ist, ein Hilfsdruckgas-Druckregler (52) mit einer belasteten, vom Ausgangsdruck des Hilfsdruckgas-Druckreglers (52) beaufschlagten Reglermembran (136) angeordnet ist,

(b) die Reglermembran (136) mit der Kraft belastet ist, die infolge des Differenzdrucks an dem Hubglied (44,64) wirksam wird, und

(c) der Ausgangsdruck des Hilfsdruckgas-Druckreglers (52) als Führungsgröße den in einer der Zufuhrleitungen angeordneten Druckregler (58,78,92) beaufschlagt.

2. Regelvorrichtung nach Anspruch 1, dadurch gekennzeichnet, daß die Hilfsdruckgasleitung (54) von der Luftzufuhrleitung (12) vor der Meßblende (42,62) abgezweigt ist, so daß ein Teil der als Verbrennungsluft zugeführten Luft das Hilfsdruckgas bildet.

3. Regelvorrichtung nach Anspruch 1 oder 2, dadurch gekennzeichnet, daß der Druckregler (58,78) in der einen Zufuhrleitung (10,12) ein Gleichdruckregler ist, an dessen Hubglied der Ausgangsdruck des Gleichdruckreglers dem Ausgangsdruck des Hilfsdruckgas-Druckreglers (52) entgegenwirkt.

4. Regelvorrichtung nach Anspruch 3, dadurch gekennzeichnet, daß

   (a) der Gleichdruckregler (58) in der Gaszufuhrleitung (10) angeordnet ist und

   (b) das von dem Differenzdruck an der Meßblende (42) beaufschlagte Hubglied (44) den Hilfsdruckgas-Druckregler (52) im Sinne einer Erhöhung seines Ausgangsdrucks bei ansteigender Druckdifferenz an der Meßblende (42) ansteuert.

5. Regelvorrichtung nach Anspruch 3, dadurch gekennzeichnet, daß

   (a) der Gasdruck in der Gaszufuhrleitung (10) durch einen Gasdruckregler auf einen festen Wert geregelt ist,

   (b) der Gleichdruckregler (78) in der Luftzufuhrleitung (12) stromab von der Meßblende (42) aber stromauf von dem Rekuperator (32) angeordnet ist und

(c) das Hubglied (136) den Hilfsdruckgas-Druckregler (52) im Sinne einer Verminderung seines Ausgangsdrucks bei ansteigender Druckdifferenz an der Meßblende (42) ansteuert.

6. Regelvorrichtung nach Anspruch 1 oder 2, dadurch gekennzeichnet, daß

(a) in der Luftzufuhrleitung (12) stromab von dem Rekuperator (32) eine zweite Meßblende (82) angeordnet ist,

(b) ein zweites Hubglied (84) von dem an der zweiten Meßblende (82) auftretenden Differenzdruck beaufschlagt ist,

(c) die Kraft, die infolge des an der zweiten Meßblende (82) wirksamen Differenzdrucks an dem zweiten Hubglied (82) wirksam wird, an der Reglermembran (136) des Hilfsdruckgas-Druckreglers (52) derjenigen Kraft entgegenwirkt, die infolge des Differenzdrucks an der stromaufwärtigen Meßblende (42) über das erste Hubglied (44) ausgeübt wird,

(d) die Gaszufuhrleitung (10) und die Luftzufuhrleitung sich in Zweige (14,16 bzw. 26,28) aufteilt, die zu je einem Brenner (20,22) geführt sind,

(e) in jedem Zweig (14,16) der Gaszufuhrleitung (10) ein Druckregler (92,94) angeordnet ist,

(f) auf alle Druckregler (92,94) als gemeinsame Führungsgröße der Ausgangsdruck des Hilfsdruckgas-Druckreglers (52) sowie, diesem entgegenwirkend, der Druck der dem jeweiligen Brenner (20,22) zugeführten Luft aufgeschaltet ist.

0024444

16

17. Regelvorrichtung nach Anspruch 6, dadurch gekennzeichnet, daß in den zu den einzelnen Brennern (20,22) geführten Zweigen (26,28) der Luftzufuhrleitung (12) einzeln temperaturgesteuerte Ventile (104,106) angeordnet sind.

FIG.1

Gas

10

14    16

72    74    76
66
64

68    70    80

62
Luft    78    32
                Reku
12

20    22

26    28

FIG.2

0024444

3/4

FIG.3

0024444

4/4

FIG. 4

**Europäisches Patentamt**

**EUROPÄISCHER RECHERCHENBERICHT**

EP 79103121.4

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| | AT - B - 196 999 (ASKANIA-WERKE) <br><br> + Totality + <br><br> -- | 1-4 |
| A | DE - A - 1 751 350 (TOKYO GAS CO. LTD) <br><br> + Beschreibung der Fig.1, Seiten 2-5 + <br><br> -- | 1 |
| A | DD - A - 48 957 (CLAUSSNITZER) <br><br> + Totality + <br><br> -- | 1,2 |
| A | DE - A - 1 902 063 (PHILIPS) <br><br> + Beschreibung der Fig., Seiten 2,3 + <br><br> -- | 1 |
| A | DE - A - 2 018 187 (THE ELECTRIC FURNACE) <br><br> + Beschreibung der Fig.1, Seiten 6-8; Seite 9, Abs.2 + <br><br> ---- | 1 |

**KLASSIFIKATION DER ANMELDUNG (Int.Cl.)** X 3

F 23 N 1/02

**RECHERCHIERTE SACHGEBIETE (Int. Cl.)** X 3

F 23 N 1/00
F 23 N 5/00
F 23 D 13/38
F 23 L 15/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| WIEN | 10-04-1980 | TSCHÖLLITSCH |